# FASCICULE DE BREVET EUROPEEN

(11) **EP 1 511 614 B1**
(45) Date de publication et mention de la délivrance du brevet: **18.02.2015**
(21) Numéro de dépôt: 03749922.5
(22) Date de dépôt: 06.05.2003
(51) Int. Cl.: B29C 51/16

(54) **INSTALLATION POUR FABRIQUER DES RECIPIENTS PAR THERMOFORMAGE AVEC MISE EN PLACE DE BANDEROLES DE DECOR SUR CES RECIPIENTS**
VORRICHTUNG ZUM HERSTELLEN VON BEHÄLTERN DURCH WARMUMFORMEN WOBEI DIE ETIKETTEN AUF DEN BEHÄLTER AUFGEBRACHT WERDEN
INSTALLATION FOR THE THERMOFORMING PRODUCTION OF CONTAINERS AND FOR THE POSITIONING OF DECORATIVE BANDEROLES THEREON

(30) Priorité: 07.05.2002 FR 0205739
(43) Date de publication de la demande: 09.03.2005
(73) Titulaire: ERCA FORMSEAL, 91940 Les Ulis (FR)
(72) Inventeur: RIOU, Jérôme, F-91650 BREUX-JOUY (FR); MICHELLON, Bernard, F-78150 LE CHESNAY (FR)
(74) Mandataire: Intès, Didier Gérard André
(86) Numéro de dépôt international: PCT/FR2003/001397
(87) Numéro de publication internationale: WO 2003/095180

(56) Documents cités:
- EP-A- 1 065 040
- FR-A- 2 256 013
- US-A- 4 394 115

## Description

La présente invention concerne une installation pour fabriquer des récipients par thermoformage et mettre en place des banderoles de décor sur ces derniers, l'installation comportant au moins un ensemble d'une chambre de thermoformage et d'une chambre d'introduction associée à ladite chambre de thermoformage, et des moyens pour amener une bandelette au voisinage de la chambre d'introduction, pour découper une banderole de décor dans ladite bandelette, pour disposer ladite banderole dans la chambre d'introduction et pour transférer la banderole dans la chambre de thermoformage.

Une installation de ce type est connue, par exemple par les documents FR-A-2 759 320 et FR-A-2 482 558.

Selon ces deux documents, pour chaque ensemble d'une chambre de thermoformage et d'une chambre d'introduction, la chambre d'introduction est disposée sous la chambre de thermoformage. Sa paroi présente une fente à travers laquelle une bandelette est amenée dans ladite chambre d'introduction. La bandelette est enroulée dans cette chambre et elle est transférée dans la chambre de thermoformage par des moyens de transfert qui se déplacent verticalement.

Dans FR-A-2 759 320, ces moyens de transfert sont formés par des doigts qui, lors de l'enroulement de la bandelette, sont en position basse de sorte que leurs extrémités supérieures se trouvent tout au plus au niveau du bord inférieur de la bandelette et qui, une fois cet enroulement terminé, peuvent être déplacés vers le haut pour que leurs extrémités supérieures portent la bandelette et l'amènent dans la chambre de thermoformage. La bandelette est alors maintenue dans la chambre de thermoformage, par exemple par aspiration contre sa paroi, et un récipient est thermoformé dans cette chambre, de telle sorte que la bandelette est solidarisée avec la paroi de ce récipient.

Dans FR-A-2 482 558, un mandrin d'enroulement aspirant est disposé dans la chambre d'introduction. Lorsqu'une bandelette pénètre dans la chambre d'introduction, elle est aspirée contre la paroi du mandrin qui tourne sur lui-même pour favoriser l'enroulement de la bandelette et former ainsi une banderole. La banderole enroulée reste plaquée contre le mandrin qui est déplacé vers le haut pour amener cette banderole dans la chambre de thermoformage. Dans cette situation, l'inspiration d'air par le mandrin est coupée, et la banderole est relâchée de manière à pouvoir se loger contre la paroi de la chambre de thermoformage, contre laquelle elle est retenue pour le thermoformage.

Dans FR-A-2 482 558, la gestion de la séquence d'enroulement des banderoles est relativement complexe puisqu'elle met en oeuvre trois paramètres importants : l'inspiration d'air par les mandrins, la rotation de ces mandrins et leur déplacement vertical. Il en résulte les risques de dysfonctionnement. De plus, les mandrins sont des pièces lourdes car leur diamètre extérieur est seulement légèrement inférieur au diamètre des chambres d'enroulement et de thermoformage.

Dans FR-A-2 759 320, l'installation est plus simple. Notamment, pour opérer le transfert d'une banderole à partir de la chambre d'introduction dans la chambre de thermoformage, il n'est pas nécessaire de réaliser une quelconque aspiration, puisque la banderole peut simplement être poussée par les doigts de transfert.

L'enroulement des banderoles dans les chambres d'introduction est opéré par poussée sur les bandelettes, grâce aux moyens d'entraînement de ces dernières qui sont extérieurs aux chambres d'introduction. Il en résulte que les couteaux de découpe des banderoles dans les bandelettes sont nécessairement très proches des parois des chambres d'introduction pour que les bandelettes soient poussées dans les chambres sur presque toute la longueur des banderoles avant d'être coupées au ras des parois des chambres. Si ces chambres sont groupées en rangées de deux chambres, il est possible d'introduire les bandelettes de chaque côté de l'ensemble formé par ces deux rangées en disposant des couteaux sur chacun de ces côtés. Lorsque l'installation comprend davantage de deux rangées de chambres d'introduction, il n'est pas possible de disposer des couteaux de découpe au voisinage immédiat des chambres de la ou des rangées intérieures, ce qui oblige à recouvrir au système de FR-A-2-482 558 pour enrouler les banderoles dans les chambres à l'aide d'un mandrin, en découpant les bandelettes sur les côtés du bloc de chambres d'introduction à distance des chambres de la ou des rangées intérieures. De plus, dans FR-A-2 759 320, il n'est pas possible de choisir la position de la zone de jonction des deux extrémités de la banderole car celle-ci se trouve toujours au voisinage immédiat de la fente d'introduction de la bandelette dans la chambre d'introduction.

EP 1 065 040 divulgue une installation selon le préambule de la revendication 1, dans laquelle la banderole est avancée dans la chambre d'introduction en étant pincée entre la roue qui est disposée dans cette chambre et un galet d'entraînement externe.

La présente invention vise à améliorer l'art antérieur précité en proposant une installation plus simple que celle de FR-A-2 482 558, mais présentant sensiblement les mêmes

Ce but est atteint grâce au fait que les moyens pour disposer la banderole dans la chambre d'introduction comprennent une roue d'entraînement, disposée dans la chambre d'introduction, et susceptible d'être entraînée en rotation et de coopérer avec la paroi de ladite chambre de manière à pincer la banderole entre elle-même et ladite paroi et à faire avancer la banderole dans la chambre.

Ainsi, avec l'invention, chaque banderole est enroulée dans la chambre d'introduction en étant entraînée dans cette dernière. Ces moyens d'entraînement et d'enroulement sont extrêmement simples car ils comprennent une roue qui utilise, comme contre-outil d'enroulement, la paroi de la chambre d'introduction. Même si la bandelette est découpée à distance de la chambre d'introduction, par exemple lorsque cette dernière est située dans une rangée intérieure d'un ensemble de chambres d'introduction comprenant trois ou quatre rangées, la banderole résultant de cette découpe peut être parfaitement enroulée dans la chambre d'introduction sur toute sa longueur, jusqu'à ce que son extrémité arrière soit disposée dans cette chambre. De plus, l'enroulement peut se poursuivre sur une course suffisante pour venir placer à l'endroit désiré les extrémités de la banderole. S'agissant par exemple de la fabrication d'un récipient destiné à être conditionné par groupe de 4 ou de 8 récipients, on peut alors faire en sorte que les extrémités des banderoles soient situées vers l'intérieur de ces groupes de récipient, de manière à ne pas être visibles lors de l'achat de ces derniers.

La conformation de la chambre d'introduction peut être extrêmement simple et sa paroi latérale peut être continue, en étant seulement percée par une fente d'introduction pour la bandelette.

Dans la mesure où la roue d'entraînement est disposée à l'intérieur de la chambre d'introduction, celle-ci peut être disposée à proximité immédiate d'une autre chambre d'introduction. On sait qu'il est avantageux de thermoformer des récipients dans des zones très proches les unes des autres d'une bande de matière thermoformable, ceci afin d'éviter les chutes. Ainsi, l'invention permet de disposer, sous des chambres de thermoformage très proches les unes des autres, des chambres d'introduction dans lesquelles les banderoles sont enroulées à l'aide de roues d'entraînement disposées dans chacune de ces chambres.

De préférence, l'installation comprend des moyens pour déplacer la roue d'entraînement entre une position inactive dans laquelle ladite roue est écartée de la paroi de la chambre d'introduction et une position active dans laquelle la roue d'entraînement est plaquée contre ladite paroi.

La roue d'entraînement est plaquée contre la paroi pour pincer une banderole entre elle-même et cette paroi de manière à enrouler ladite banderole dans la chambre d'introduction. Une fois que l'enroulement est terminé, la roue d'entraînement est déplacée dans sa position inactive dans laquelle elle est écartée de la paroi, pour faciliter le transfert de la banderole dans la chambre de thermoformage. Ce transfert s'opère par exemple par des doigts de transfert comme dans FR-A-2 759 320. La roue d'entraînement peut être fixe verticalement, et être commandée selon les mouvements très simples comprenant une rotation à une vitesse souhaitée et une translation dans un plan horizontal pour s'écarter de la paroi de la chambre d'introduction ou se plaquer contre cette paroi.

Avantageusement, la roue d'entraînement est solidaire d'une plaque de support susceptible d'être déplacée perpendiculairement à l'axe de rotation de ladite roue.

Ainsi, avantageusement, l'installation comporte une rangée d'ensembles comprenant chacun une chambre de thermoformage et une chambre d'introduction, et les roues d'entraînement disposées dans les chambres d'introduction des ensembles de ladite rangée sont solidaires d'une même plaque de support déplaçable.

Ainsi, pour déplacer les roues d'entraînement de leurs positions inactives à leurs position actives, il suffit de déplacer cette plaque de support dans un plan horizontal. Les roues d'entraînement peuvent toutes être entraînées simultanément et par des moyens très simples qui assurent la fiabilité de l'installation.

Avantageusement, la roue d'entraînement est portée par un arbre vertical coopérant avec un arbre moteur horizontal par l'intermédiaire d'un renvoi d'angle.

Ainsi, avantageusement, l'installation comporte une rangée d'ensembles comprenant chacun une chambre de thermoformage et une chambre d'introduction, et les roues d'entraînement disposées dans les chambres d'introduction de cette rangée sont portées chacune par un arbre vertical, ces arbres verticaux coopérant avec un même arbre moteur horizontal par des renvois d'angle.

Selon une variante avantageuse, un noyau conformateur est disposé à l'intérieur de la chambre d'introduction et ce noyau présente une gorge longitudinale ouverte sur sa périphérie, dans laquelle est disposée la roue d'entraînement.

La banderole s'enroule naturellement dans l'espace annulaire ménagé entre le noyau conformateur et la paroi de la chambre d'introduction. Ce noyau constitue un élément fixe, qui guide l'enroulement de la banderole.

L'installation comprend avantageusement plusieurs rangées de chambre de thermoformage, sous chacune desquelles est disposée une chambre d'introduction. Ces rangées comprennent par exemple deux rangées extérieures et au moins une rangée intérieure. Les banderoles destinées à être disposées dans les chambres d'introduction de la rangée intérieure sont découpées sur le côté du bloc de chambres d'introduction. La distance entre les moyens de découpe situés à l'extérieur du bloc et les roues d'entraînement, disposées dans les chambres de cette rangée intérieure, est inférieure à la longueur d'une banderole de telle sorte qu'une roue d'entraînement coopère déjà avec l'extrémité menante d'une bandelette avant que cette bandelette ne soit découpée pour former une banderole.

L'invention sera bien comprise et ses avantages apparaîtront mieux à la lecture de la description détaillée qui suit, d'un mode de réalisation représenté à titre d'exemple non limitatif. L'invention se réfère aux dessins annexés sur lesquels :
- la figure 1 est une vue schématique d'une installation conforme à l'invention ;
- la figure 2 montre, en coupe longitudinale, un bloc de chambre de thermoformage et de chambres d'introduction de banderoles de cette installation ;
- la figure 3 montre le même bloc, en perspective ;
- la figure 4 est une vue partielle en coupe selon la ligne IV-IV de la figure 2 ;
- la figure 4A est un agrandissement de la zone IVA de la figure 4 ; et
- la figure 5 est une vue partielle de la figure 3.

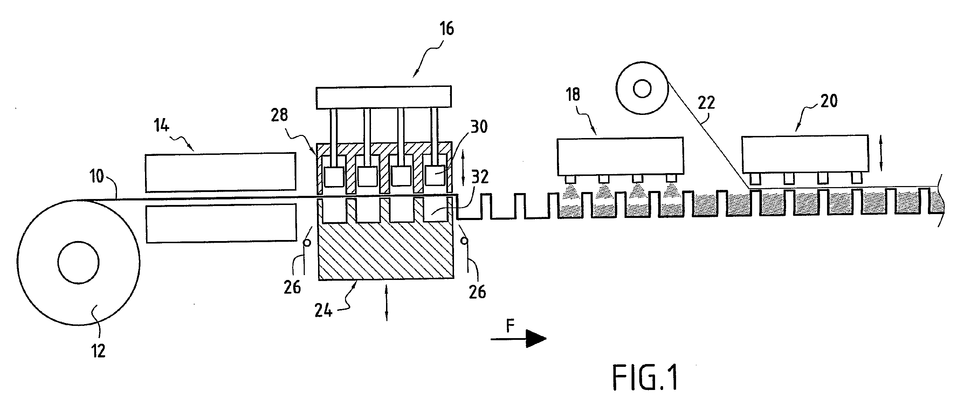

L'installation représentée sur la figure 1 comprend plusieurs stations au travers desquelles est entraînée pas à pas une bande 10 en matériau thermoplastique, par des moyens d'entraînement 12. Considérée successivement dans le sens F d'avancement de la bande, l'installation comprend une station 14 de chauffage, une station 16 de thermoformage, une station 18 de remplissage des récipients thermoformés et une station 20 de fermeture de ces récipients par scellement, au travers de leurs ouvertures, d'une bande de fermeture 22.

La station de thermoformage 16 comprend, de manière connue en soi, un bloc 24 de chambres de thermoformage et de chambres d'introduction de bandelettes 26 dans les chambres de thermoformage, ainsi qu'un bloc 28 de pistons 30 de thermoformage, déplaçables dans ces chambres.

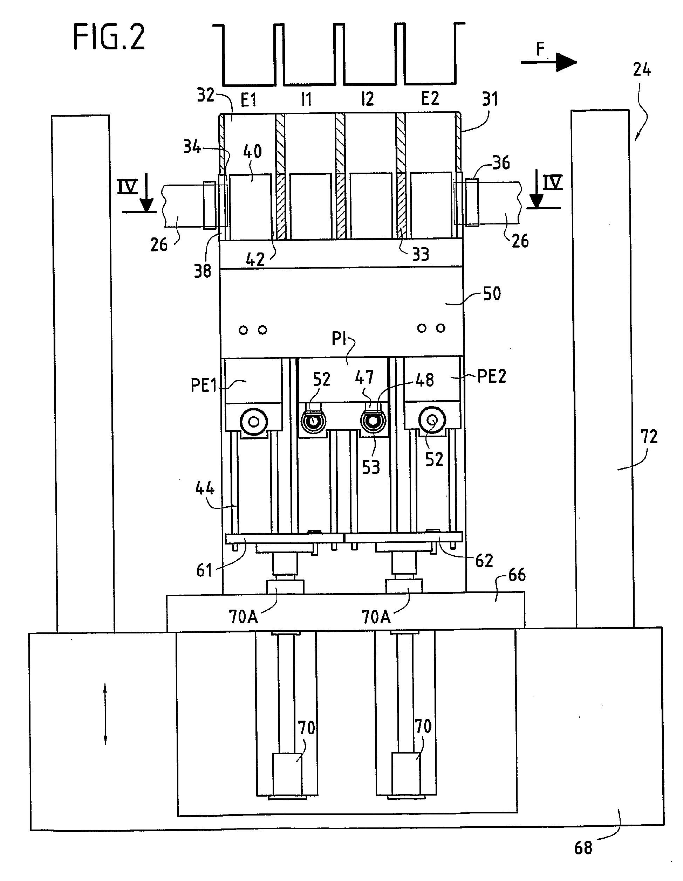

Les chambres de thermoformage 32 sont représentées schématiquement sur la figure 1, mais la figure 2 montre plus en détail la conformation du bloc 24. Dans l'exemple représenté, ce bloc comprend quatre rangées de chambres de thermoformage 32. A chaque chambre de thermoformage est associée une chambre 34 d'introduction. Les bandelettes de décor 26 sont amenées, par des moyens d'amenée comprenant notamment des roues d'entraînement 36 jusqu'au voisinage des chambres d'introduction.

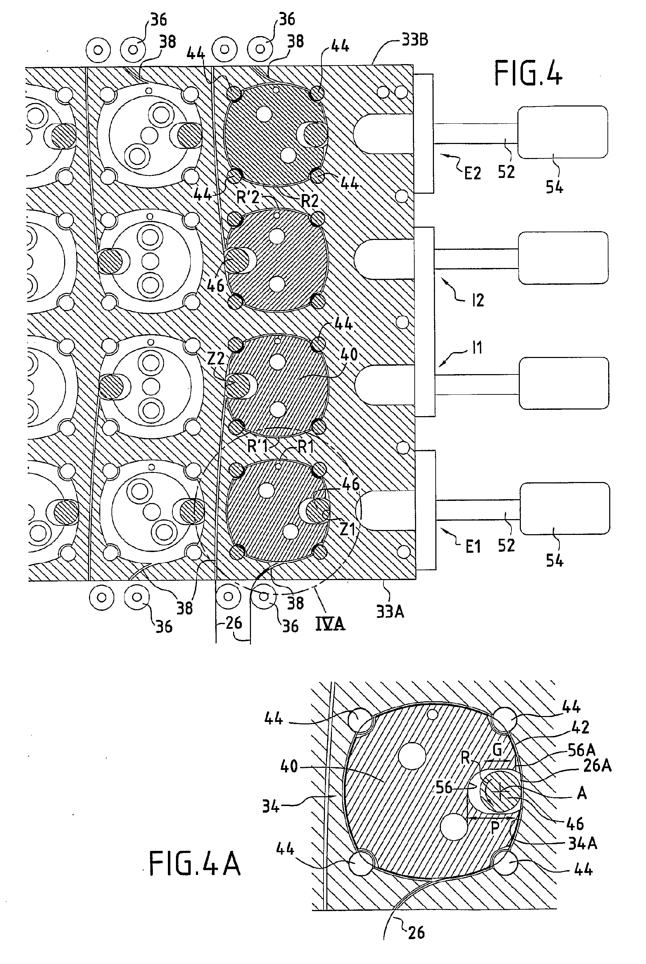

Pour simplifier, la figure 2 ne montre que deux bandelettes 26, respectivement amenées dans les chambres d'introduction 32 des rangées extérieures E1 et E2 du bloc 24. On voit sur la figure 4 qu'une bandelette 26 est amenée dans chaque chambre d'introduction, y compris dans celles des rangées intérieures I1 et I2. Les parois des chambres d'introduction 34 présentent des fentes 38 dans lesquelles peuvent être introduites les extrémités avant des bandelettes. Les chambres 32 sont formées dans un bloc de chambres de thermoformage 31 et les chambres 34 sont formées dans un bloc de chambres d'introduction 33 disposé sous le bloc 31.

Les bandelettes sont découpées au voisinage de ces fentes par des moyens de découpe appropriés, de telle sorte qu'une banderole est formée entre l'extrémité libre de chaque bandelette et la découpe, cette banderole étant enroulée dans la chambre d'introduction considérée.

Par exemple, les moyens d'amenée des bandelettes dans les chambres d'introduction et les moyens de découpe de ces bandelettes sont conformes à ce que divulgue FR-A-2 759 320. A l'intérieur de chaque chambre d'introduction est disposé un noyau conformateur 40 de telle sorte qu'un espace annulaire d'enroulement 42 est préservé, dans chaque chambre d'introduction, entre le noyau et la paroi intérieure de la chambre. Les banderoles s'enroulent dans ces espaces annulaires.

Une fois enroulées dans les chambres d'introduction, les banderoles peuvent être transférées dans les chambres de thermoformage par un déplacement vertical. Pour cela, le poste 24 comprend des moyens de transfert constitués, dans l'exemple représenté, par des doigts 44 mobiles entre une position basse d'attente, représentée sur la figure 2, et une position haute dans laquelle ils traversent les chambres d'introduction et portent les banderoles par leurs extrémités supérieures, de manière à disposer ces banderoles dans les chambres de thermoformage. Par exemple, ces moyens de transfert sont du type de ceux que divulgue FR-A-2 759 320.

Pour chaque chambre d'introduction, les moyens pour disposer la banderole dans la chambre d'introduction comprennent une roue d'entraînement 46 qui peut être entraînée en rotation et coopérer avec la paroi 34A de cette chambre d'introduction 34 pour pincer la bandelette 26 entre elle-même et cette paroi. On comprend sur la figure 4A, que la rotation de la roue 46 dans le sens R autour de son axe A entraîne l'extrémité découpée de la bandelette constituant une banderole 26A dans la chambre 34 jusqu'à ce que cette banderole ait été enroulée sur elle-même et dans cette chambre.

Pour chaque chambre d'introduction 34, la roue d'entraînement 46 est formée par l'extrémité, en l'espèce l'extrémité supérieure, d'un arbre vertical d'entraînement. Les roues 46 peuvent avoir un revêtement favorisant la génération de forces de frottement contre les banderoles. Par exemple, les extrémités des arbres 47 qui forment ces roues peuvent porter des joncs toriques en caoutchouc ou analogue.

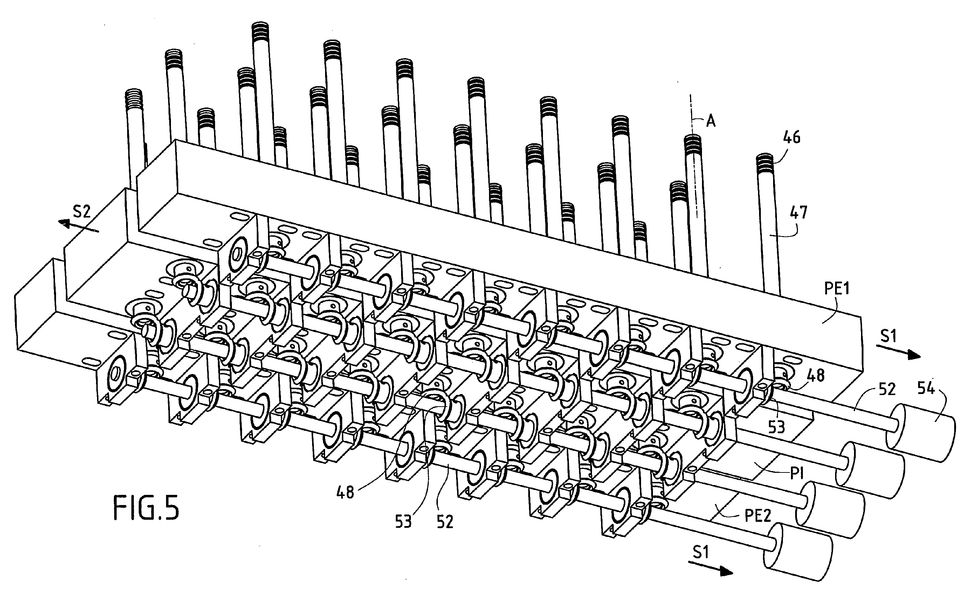

Les noyaux conformateurs 40 sont portés par une plaque de support 50. Cette plaque est traversée par les arbres 47 dont on voit sur la figure 2 les extrémités inférieures qui sont pourvues de roues dentées tronconiques de renvoi d'angle 48. En effet, comme on le voit mieux sur la figure 5, les arbres verticaux 47 sont entraînés en rotation par des arbres moteurs horizontaux 52, par l'intermédiaire de systèmes de renvoi d'angle. Il existe un arbre horizontal d'entraînement 52 pour chaque rangée d'ensembles comprenant chacun une chambre de thermoformage 32 et une chambre d'introduction 34 disposée l'une au-dessus de l'autre. Les arbres moteurs 52 sont entraînés par des moteurs 54 de tout type connu, par exemple des moteurs Brushless. Les arbres 52 portent, à des intervalles déterminés correspondant à l'espacement des arbres 47, des roues tronconiques de renvoi d'angle 53, coopérant avec les roues 48.

Pour chaque chambre d'introduction, la roue d'entraînement 46 est déplaçable dans la direction G entre une position active, représentée sur les figures, dans laquelle elle coopère avec la paroi de la chambre d'introduction pour pincer contre elle une banderole 26A et une position inactive, dans laquelle elle est écartée de cette paroi pour libérer le pincement de la banderole. Lorsque la roue d'entraînement occupe sa position inactive, la banderole qui vient d'être enroulée dans la chambre 34 peut être transférée dans la chambre de thermoformage 32 disposée au-dessus de cette chambre 34.

Pour chaque chambre d'introduction, le noyau conformateur 40 présente une gorge longitudinale (verticale) 56 dans laquelle est disposée la roue d'entraînement 46. La profondeur horizontale P de cette gorge 56 permet le débattement de la roue d'entraînement entre sa position active et sa position inactive. La gorge 56 se prolonge vers le bas dans le bloc 50 pour permettre le passage de l'arbre 47 qui porte la roue 46.

Avantageusement, la gorge 56 s'interrompt légèrement avant le sommet du noyau 40 pour que ce sommet puisse servir de fond à la chambre de thermoformage 32 disposée au-dessus de la chambre d'introduction considérée.

Sur son côté aval dans le sens de progression de la banderole dans la chambre d'introduction, la gorge 56 présente un chanfrein 56A qui guide la banderole dans l'espace annulaire 42 en évitant qu'elle ne se bloque dans la gorge lorsque son extrémité avant parvient au contact du chanfrein 56A.

Les roues d'entraînement 36 sont solidaires de plaques de support susceptibles d'être déplacées perpendiculairement aux axes de rotation de ces roues pour opérer le déplacement desdites roues entre leurs positions actives et leurs positions inactives.

Comme on le voit sur la figure 2, lorsque l'on considère une rangée d'ensemble comprenant chacun une chambre de thermoformage 32 et une chambre d'introduction 34 disposée en dessous de cette chambre 32, les roues d'entraînement 46 disposées dans les chambres d'introduction de ces ensembles sont solidaires d'une même plaque de support déplaçable. Plus précisément, dans l'exemple représenté, les roues d'entraînement disposées dans les chambres d'introduction des deux rangées extérieures E1 et E2 sont respectivement solidaires d'une première plaque de support extérieur PE1 et d'une deuxième plaque de support extérieur PE2, tandis que les roues d'entraînement disposées dans les chambres d'introduction des deux rangées intérieures I1 et I2 sont solidaires d'une même plaque de support intérieur PI.

Sur la figure 5, on n'a pas représenté les blocs 31, 33 et 50 pour mieux voir la conformation des arbres 47 et des plaques de support.

Les plaques de support extérieures PE1 et PE2 d'une part, et la plaque de support intérieur PI d'autre part, sont mobiles en opposition de phase. La figure 5 montre des dispositions des plaques de support dans la position active des roues d'entraînement, puisque les systèmes de renvoi d'angle 48 et 53 des arbres 47 et des arbres 52 coopèrent entre eux. On comprend sur cette figure que, pour amener les roues d'entraînement 46 qui sont solidaires des plaques extérieures PE1 et PE2 dans leurs positions inactives, il faut déplacer ces plaques dans le sens S1, tandis que pour amener les roues d'entraînement qui sont solidaires de la plaque intérieure PI dans leurs positions inactives, il faut déplacer cette plaque dans le sens S2, opposé au sens S1.

Les arbres 52 sont disposés horizontalement, transversalement par rapport au sens F d'avancement de la bande thermoplastique 10 dans l'installation. Ainsi, considérant une rangée d'ensembles comprenant chacun une chambre de thermoformage 32 et une chambre d'introduction disposée l'une au-dessus de l'autre, les roues d'entraînement disposées dans les chambres d'introduction de cette rangée sont portées chacune par un arbre vertical 47, tous ces arbres verticaux coopérant avec un même arbre horizontal 52 par les renvois d'angle précités. Il est entendu que les rangées E1, I1, I2 et E2 sont disposées transversalement au sens F.

Dans l'exemple représenté, toutes les chambres d'introduction 34 sont disposées dans un même bloc de chambres d'introduction 33. Pour chaque chambre, l'extrémité de la bandelette dans laquelle sera découpée la banderole est introduite dans la chambre par une fente d'introduction disposée sur un côté du bloc. Ainsi, pour chaque rangée de chambres d'introduction, le bloc présente une série de fentes d'introduction.

Dans l'exemple représenté, le bloc 24 comporte quatre rangées d'ensembles comprenant chacun une chambre de thermoformage 32 et une chambre d'introduction 34 disposées l'une au-dessus de l'autre. Le bloc de chambres d'introduction 33 présente donc quatre séries de fentes associées, respectivement, à chacune des quatre rangées. Deux séries de fentes 38, communiquant respectivement avec les chambres d'une rangée extérieure et avec les chambres de la rangée intérieure juxtaposée sont disposées sur deux côtés opposés du bloc 33.

Considéré dans le sens d'avancement F de la bande thermoplastique, le bloc de chambres d'introduction 33 comprend un côté amont 33A et un côté aval 33B. Les fentes qui permettent l'introduction de banderoles dans les chambres de la première rangée extérieure 1, ainsi que celles qui permettent l'introduction de banderole dans les chambres de la première rangée intérieure I1, s'ouvrent sur le côté amont 33A, tandis que les autres fentes s'ouvrent sur le côté aval 33B.

Sur la figure 4, le plan de coupe passe par les noyaux 40 et par les doigts de transfert 44 des quatre chambres de droite, les doigts 44 étant par exemple dans leurs positions hautes. Pour simplifier, on a omis de représenter les noyaux conformateurs et les doigts de transfert des autres chambres, seuls étant visibles les supports cylindriques des noyaux.

Si l'on considère les chambres des rangées extérieures E1 et E2, la zone de contact Z1 entre la roue d'entraînement 46 disposée dans cette chambre et la paroi de ladite chambre est espacée du passage d'introduction de la banderole formée par la fente 38. On voit en effet que les extrémités des bandelettes 26 avancent sur pratiquement un quart de tour dans les chambres des rangées extérieures avant de parvenir en contact des roues d'entraînement 46. Il convient de relever que, pour ces chambres, la longueur du passage d'introduction formé par la fente 38 est très faible et est nettement inférieure à la longueur d'une banderole car ces chambres sont proches d'un côté 33A ou 33B du bloc de chambres d'introduction contre lequel sont disposés les moyens de découpe des banderoles.

En revanche, lorsque l'on considère les chambres des rangées intérieures I1 et I2, on constate que les roues d'entraînement 46 sont situées immédiatement à l'entrée des banderoles dans ces chambres. En effet, pour ces chambres, les passages d'introduction de banderoles formés par les fentes 38 sont beaucoup plus longs car ces chambres sont situées à distance des côtés 33A et 33B du bloc de chambres d'introduction. Il convient que l'extrémité menante d'une bandelette ait atteint une roue 46 avant que cette bandelette ne soit découpée pour former une banderole. La longueur du trajet entre l'ouverture d'une fente 38 sur un côté du bloc de chambres d'introduction et la zone de contact Z2 entre la roue d'entraînement 46 et la paroi de la chambre de la rangée intérieure avec laquelle elle coopère doit être inférieure à la longueur totale d'une banderole, qui elle-même est très légèrement supérieure au périmètre de la chambre d'introduction 40.

Les récipients fabriqués dans l'installation peuvent être conditionnés en groupe de plusieurs récipients, par exemple quatre. Dans ce cas, il est souhaitable que les zones de raccord des extrémités des banderoles se trouvent vers l'intérieur de ces groupes, sans être visibles de l'extérieur. Ainsi, il est avantageux que, après enroulement complet d'une banderole dans une chambre d'enroulement 34 appartenant à une rangée extérieure E1 ou E2, la roue d'entraînement située dans cette chambre continue d'être entraînée pour déplacer cette banderole selon un quart de tour, de telle sorte que la zone de raccord vienne se placer dans les zones R1 pour la rangée E1 et R2 pour la rangée R2.

En ce qui concerne les chambres des rangées intérieures, il est avantageux que, après enroulement complet d'une banderole dans l'une de ces chambres, la roue d'entraînement 46 située dans cette chambre continue de tourner pour entraîner cette banderole selon trois quarts de tour de manière à placer la zone de raccord dans la zone R'1 pour les chambres de la rangée I1 ou dans la zone R'2 pour les chambres de la rangée I2.

L'invention peut s'appliquer à une installation comprenant seulement deux rangées de chambres de thermoformage et de chambres d'introduction, disposées les unes au-dessus des autres. Dans ce cas, il est avantageux que les chambres d'introduction soient disposées dans un même bloc de chambres d'introduction et que ce bloc présente, pour chacune de ces rangées, une série de fentes d'introduction permettant l'introduction d'une banderole de décor dans chaque chambre de la rangée, les deux séries de fente étant disposées sur deux côtés opposés du bloc de chambres d'introduction.

Sur la figure 2, on voit que les doigts de transfert 44 sont portés par des plaques de transfert, respectivement 61 pour les doigts opérant le transfert dans les rangées E1 et I1, et 62 pour les doigts opérant le transfert dans les rangées E2 et I2. Ces plaques 61 et 62 sont portées par les têtes 70A de vérins 70 par rapport à une plaque de support 66. Ces vérins sont commandés pour opérer le déplacement vertical des doigts 44 dans les chambres d'introduction 34. La plaque 66 est elle-même portée par une table 68 qui porte également le bloc 50 de support des noyaux conformateurs, le bloc 33 de chambres d'introduction et le bloc 31 de chambre de thermoformage. Elle porte également les plaques P1, PI et PE2, ainsi que les arbres 52 et leurs moteurs 54. Pour opérer le thermoformage, le bloc de chambres de thermoformage doit être déplacé vers le haut pour venir se situer contre la feuille de matériau thermoplastique, et vers le bas pour permettre le démoulage des récipients thermoformés et l'avancement de cette feuille.

La table 68 qui porte l'ensemble du bloc 24 se déplace donc verticalement en étant guidée par les colonnes 72.

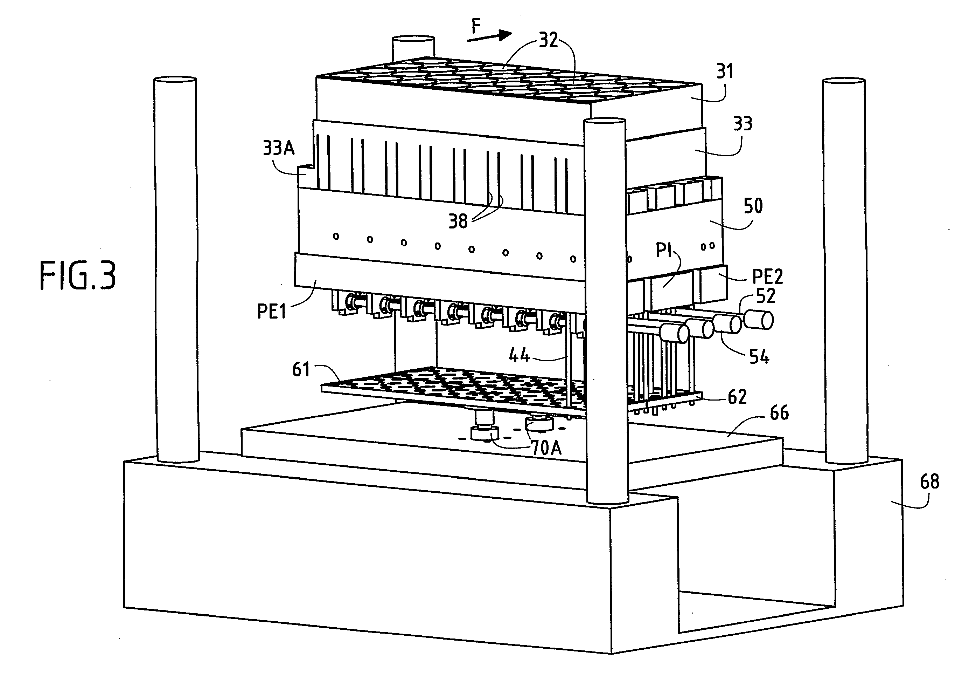

La figure 3 est schématique et, notamment, la plupart des doigts de transfert 44 sont omis sur cette figure pour la clarté du dessin. On voit sur la figure 2 que les blocs 31, 33 et 50 sont supportés par rapport à la plaque 66. Ce support est également omis sur la figure 3.

## Revendications

1. Installation pour fabriquer des récipients par thermoformage et mettre en place des banderoles de décor (26A) sur ces derniers, l'installation comportant au moins un ensemble d'une chambre de thermoformage (32) et d'une chambre d'introduction (34) associée à ladite chambre de thermoformage, et des moyens (36, 46, 44) pour amener une bandelette au voisinage de la chambre d'introduction, pour découper une banderole de décor dans ladite bandelette, pour disposer ladite banderole dans la chambre d'introduction et pour transférer la banderole dans la chambre de thermoformage, les moyens pour disposer la banderole dans la chambre d'introduction comprenant une roue (46) disposée dans la chambre d'introduction (34),
**caractérisée en ce que** la roue (46) disposée dans la chambre d'introduction est une roue d'entraînement susceptible d'être entraînée en rotation et de coopérer avec la paroi (34A) de ladite chambre de manière à pincer la banderole entre elle-même et ladite paroi et à faire avancer la banderole dans la chambre.

2. Installation selon la revendication 1, **caractérisée en ce qu'**elle comprend des moyens pour déplacer (G) la roue d'entraînement (46) entre une position inactive dans laquelle ladite roue est écartée de la paroi (34A) de la chambre d'introduction (34) et une position active dans laquelle la roue d'entraînement est plaquée contre ladite paroi.

3. Installation selon la revendication 2, **caractérisée en ce que** la roue d'entraînement (36) est solidaire d'une plaque de support (PE1, PI, PE2) susceptible d'être déplacée perpendiculairement à l'axe de rotation (A) de ladite roue.

4. Installation selon l'une quelconque des revendications 1 à 3, **caractérisée en ce que** la roue d'entraînement (46) est portée par un arbre vertical (47) coopérant avec un arbre moteur horizontal (52) par l'intermédiaire d'un renvoi d'angle (48, 53).

5. Installation selon l'une quelconque des revendications 1 à 4, **caractérisée en ce qu'**un noyau conformateur (40) est disposé à l'intérieur de la chambre d'introduction (34) et **en ce que** ce noyau présente une gorge longitudinale (56) ouverte sur sa périphérie, dans laquelle est disposée la roue d'entraînement (46).

6. Installation selon l'une quelconque des revendications 1 à 5, **caractérisée en ce que** la paroi (34A) de la chambre d'introduction (34) présente une fente longitudinale (38) formant un passage pour l'introduction de la banderole (26A) dans ladite chambre et **en ce que** la zone de contact (Z1) entre la roue d'entraînement et la paroi de la chambre est espacée de ce passage.

7. Installation selon la revendication 4 et l'une quelconque des revendications 1 à 6, **caractérisée en ce qu'**elle comporte au moins une rangée (E1, I1, I2, E2) d'ensembles comprenant chacun une chambre de thermoformage (32) et une chambre d'introduction (34), et **en ce que** les roues d'entraînement (46) disposées dans les chambres d'introduction de cette rangée sont portées chacune par un arbre vertical (47), ces arbres verticaux coopérant avec un même arbre moteur horizontal (52) par des renvois d'angle (48, 53).

8. Installation selon la revendication 3 et l'une quelconque des revendications 1 à 7, **caractérisée en ce qu'**elle comporte au moins une rangée (E1, I1, I2, E2) d'ensembles comprenant chacun une chambre de thermoformage (32) et une chambre d'introduction (34), et **en ce que** les roues d'entraînement (46) disposées dans les chambres d'introduction des ensembles de ladite rangée sont solidaires d'une même plaque de support (PE1, PI, PE2) déplaçable.

9. Installation selon l'une quelconque des revendications 1 à 8, **caractérisée en ce qu'**elle comporte au moins deux rangées (E1, E2) d'ensembles comprenant chacun une chambre de thermoformage (32) et une chambre d'introduction (34), **en ce que** les chambres d'introduction sont disposées dans un même bloc de chambres d'introduction (33) et **en ce que** ce bloc présente, pour chacune desdites rangées, une série de fentes d'introduction (38) permettant l'introduction d'une banderole de décor (26A) dans chaque chambre de la rangée, les deux séries de fentes étant disposées sur deux côtés opposés (33A, 33B) du bloc de chambres d'introduction.

10. Installation selon la revendication 9, **caractérisée en ce qu'**elle comporte quatre rangées (E1, I1, I2, E2) d'ensembles comprenant chacun une chambre de thermoformage (32) et une chambre d'introduction (34), ces quatre rangées comprenant deux rangées extérieures (E1, E2) et deux rangées intérieures (I1, I2) disposées entre elles, **en ce que** les chambres d'introduction (34) sont disposées dans le même bloc de chambres d'introduction (33) et **en ce que** ce bloc présente, pour chacune desdites rangées, une série de fentes d'introduction (38) permettant l'introduction d'une banderole de décor (26A) dans chaque chambre de la rangée, deux séries de fentes, communiquant respectivement avec les chambres d'une rangée extérieure (E1 ; E2) et avec les chambres de la rangée intérieure juxtaposée (I1 ; I2), étant disposées sur deux côtés opposés (33A, 33B) du bloc de chambres d'introduction.

11. Installation selon la revendication 10, **caractérisée en ce que** les roues d'entraînement (46) disposées dans les chambres d'introduction (34) de la première rangée extérieure (E1) sont solidaires d'une première plaque de support extérieure (PE1), les roues d'entraînement disposées dans les chambres d'introduction des deux rangées intérieures (I1, I2) sont solidaires d'une plaque de support intérieure (PI), et les roues d'entraînement disposées dans les chambres d'introduction de la deuxième rangée extérieure (E2) sont solidaires d'une deuxième plaque de support extérieure (P1, P2), et **en ce que** les deux plaques de support extérieure (PE1, PE2) d'une part et la plaque de support intérieure (PI) d'autre part, sont mobiles en opposition de phase (S1, S2).

## Patentansprüche

1. Anlage zur Herstellung von Behältern durch Thermoformen und zum Anbringen von Zierbanderolen (26A) an diesen, wobei die Anlage wenigstens eine Anordnung aus einer Thermoformkammer (32) und einer Einführkammer (34), welche der Thermoformkammer zugeordnet ist, sowie Mittel (36, 46, 44) umfasst, um einen Streifen in die Nähe der Einführkammer zu führen, um eine Zierbanderole aus dem Streifen auszuschneiden, um die Banderole in der Einführkammer anzuordnen und um die Banderole in die Thermoformkammer zu überführen, wobei die Mittel zum Anordnen der Banderole in der Einführkammer ein in der Einführkammer (34) angeordnetes Rad (46) umfassen,
**dadurch gekennzeichnet, dass** das in der Einführkammer angeordnete Rad (46) ein Antriebsrad ist, das geeignet ist, drehangetrieben zu werden und mit der Wand (34A) der Kammer derart zusammenzuwirken, dass die Banderole zwischen ihr selbst und der Wand eingeklemmt und die Banderole in der Kammer vorwärts bewegt wird.

2. Anlage nach Anspruch 1, **dadurch gekennzeichnet, dass** sie Mittel zum Bewegen (G) des Antriebsrades (46) zwischen einer inaktiven Position, in der das Rad von der Wand (34A) der Einführkammer (34) entfernt ist, und einer aktiven Position, in der das Antriebsrad gegen die Wand gedrückt ist, umfasst.

3. Anlage nach Anspruch 2, **dadurch gekennzeichnet, dass** das Antriebsrad (36) mit einer Tragplatte (PE1, PI, PE2), die geeignet ist, zu der Rotationsachse (A) des Rades senkrecht bewegt zu werden, fest verbunden ist.

4. Anlage nach einem der Ansprüche 1 bis 3, **dadurch gekennzeichnet, dass** das Antriebsrad (46) von einer vertikalen Welle (47) getragen ist, die mittels eines Winkelgetriebes (48, 53) mit einer horizontalen Antriebswelle (52) zusammenwirkt.

5. Anlage nach einem der Ansprüche 1 bis 4, **dadurch gekennzeichnet, dass** ein Formungskern (40) innerhalb der Einführkammer (34) angeordnet ist und dass dieser Kern eine an seinem Umfang offene Längskehle (56) aufweist, in der das Antriebsrad (46) angeordnet ist.

6. Anlage nach einem der Ansprüche 1 bis 5, **dadurch gekennzeichnet, dass** die Wand (34A) der Einführkammer (34) einen Längsschlitz (38), der einen Durchgang für das Einführen der Banderole (26A) in die Kammer bildet, aufweist und dass der Kontaktbereich (Z1) zwischen dem Antriebsrad und der Wand der Kammer von diesem Durchgang beabstandet ist.

7. Anlage nach Anspruch 4 und einem der Ansprüche 1 bis 6, **dadurch gekennzeichnet, dass** sie wenigstens eine Reihe (E1, 11, 12, E2) von Anordnungen mit jeweils einer Thermoformkammer (32) und einer Einführkammer (34) umfasst und dass die in den Einführkammern dieser Reihe angeordneten Antriebsräder (46) jeweils von einer vertikalen Welle (47) getragen sind, wobei diese vertikalen Wellen über Winkelgetriebe (48, 53) mit einer gleichen horizontalen Antriebswelle (52) zusammenwirken.

8. Anlage nach Anspruch 3 und einem der Ansprüche 1 bis 7, **dadurch gekennzeichnet, dass** sie wenigstens eine Reihe (E1, I1, 12, E2) von Anordnungen mit jeweils einer Thermoformkammer (32) und einer Einführkammer (34) umfasst und dass die in den Einführkammern der Anordnungen der Reihe angeordneten Antriebsräder (46) mit einer gleichen beweglichen Tragplatte (PE1, PI, PE2) fest verbunden sind.

9. Anlage nach einem der Ansprüche 1 bis 8, **dadurch gekennzeichnet, dass** sie wenigstens zwei Reihen (E1, E2) von Anordnungen mit jeweils einer Thermoformkammer (32) und einer Einführkammer (34) umfasst, dass die Einführkammern in einem gleichen Einführkammerblock (33) angeordnet sind und dass dieser Block für eine jede der Reihen eine Reihe von Einführschlitzen (38), die das Einführen einer Zierbanderole (26A) in jede Kammer der Reihe ermöglichen, aufweist, wobei die beiden Reihen von Schlitzen auf zwei gegenüberliegenden Seiten (33A, 33B) des Einführkammerblocks angeordnet sind.

10. Anlage nach Anspruch 9, **dadurch gekennzeichnet, dass** sie vier Reihen (E1, I1, I2, E2) von Anordnungen mit jeweils einer Thermoformkammer (32) und einer Einführkammer (34) umfasst, wobei diese vier Reihen zwei äußere Reihen (E1, E2) und zwei zwischen ihnen angeordnete innere Reihen (I1, I2) umfassen, dass die Einführkammern (34) in dem gleichen Einführkammerblock (33) angeordnet sind und dass dieser Block für eine jede der Reihen eine Reihe von Einführschlitzen (38), die das Einführen einer Zierbanderole (26A) in jede Kammer der Reihe ermöglichen, aufweist, wobei zwei Reihen von Schlitzen, die mit den Kammer einer äußeren Reihe (E1; E2) bzw. mit den Kammern der daneben liegenden inneren Reihe (11; I2) in Verbindung sind, auf zwei gegenüberliegenden Seiten (33A, 33B) des Einführkammerblocks angeordnet sind.

11. Anlage nach Anspruch 10, **dadurch gekennzeichnet, dass** die Antriebsräder (46), die in den Einführkammern (34) der ersten äußeren Reihe (E1) angeordnet sind, mit einer ersten äußeren Tragplatte (PE1) fest verbunden sind, die Antriebsräder, die in den Einführkammern der beiden inneren Reihen (I1, I2) angeordnet sind, mit einer inneren Tragplatte (PI) fest verbunden sind und die Antriebsräder, die in den Einführkammern der zweiten äußeren Reihe (E2) angeordnet sind, mit einer zweiten äußeren Tragplatte (P1, P2) fest verbunden sind, und dass die beiden äußeren Tragplatten (PE1, PE2) einerseits und die innere Tragplatte (PI) andererseits gegenphasig (S1, S2) beweglich sind.

## Claims

1. An installation for manufacturing receptacles by thermoforming, and for putting decorative banderoles (26A) in place thereon, the installation including at least one set made up of a thermoforming chamber (32) and of an insertion chamber (34) associated with said thermoforming chamber, and means (36, 46, 44) for feeding a strip to the vicinity of the insertion chamber, for cutting a decorative banderole from said strip, for disposing said banderole in the insertion chamber, and for transferring said banderole into the thermoforming chamber, the means for disposing the banderole in the insertion chamber comprising a wheel (46) located in the insertion chamber (34), **characterized in that** the wheel (46) located in the insertion chamber (34) is a drive wheel configured to be driven in rotation and to cooperate with the wall (34A) of said chamber in a manner such as to nip the banderole between said wheel and said wall, and such as to cause the banderole to advance into the chamber.

2. An installation according to claim 1, **characterized in that** it includes means for displacing (G) the drive wheel (46) between an inactive position in which said wheel is spaced apart from the wall (34A) of the insertion chamber (34) and an active position in which the drive wheel is pressed against said wall.

3. An installation according to claim 2, **characterized in that** the drive wheel (36) is secured to a support plate (PE1, PI, PE2) suitable for being moved perpendicularly to the axis of rotation (A) of said wheel.

4. An installation according to any one of claims 1 to 3, **characterized in that** the drive wheel (46) is carried by a vertical shaft (47) co-operating with a horizontal drive shaft (52) via a bevel gear (48, 53).

5. An installation according to any one of claims 1 to 4, **characterized in that** a shaping core (40) is disposed inside the insertion chamber (34), and **in that** the core has a longitudinal groove (56) open over its periphery, in which the drive wheel (46) is located.

6. An installation according to any one of claims 1 to 5, **characterized in that** the wall (34A) of the insertion chamber (34) is provided with a longitudinal slot (38) forming a passageway for inserting the banderole (26A) into said chamber, and **in that** the contact zone (Z1) between the drive wheel and the wall of the chamber is spaced apart from said passageway.

7. An installation according to claim 4 and to any one of claims 1 to 6, **characterized in that** it has at least one row (E1, I1, I2, E2) of sets each comprising a thermoforming chamber (32) and an insertion chamber (34), and **in that** the drive wheels (46) located in the insertion chambers of said row are each carried by a respective vertical shaft (47), said vertical shafts co-operating with a common horizontal drive shaft (52) via bevel gears (48, 53).

8. An installation according to claim 3 and to any one of claims 1 to 7, **characterized in that** it includes at least one row (E1, I1, I2, E2) of sets each comprising a thermoforming chamber (32) and an insertion chamber (34), and **in that** the drive wheels (46) located in the insertion chambers of the sets of said row are secured to a common moveable support plate (PE1, PI, PE2).

9. An installation according to any one of claims 1 to 8, **characterized in that** it includes at least two rows (E1, E2) of sets each comprising a thermoforming chamber (32) and an insertion chamber (34), **in that** the insertion chambers are arranged in the same block of insertion chambers (33), and **in that**, for each of said rows, said block is provided with a series of insertion slots (38) making it possible to insert a decorative banderole (26A) in each chamber of the row, the two series of slots being arranged on respective ones of two opposite sides (33A, 33B) of the block of insertion chambers.

10. An installation according to claim 9, **characterized in that** it includes four rows (E1, I1, I2, E2) of sets each comprising a thermoforming chamber (32) and an insertion chamber (34), said four rows comprising two outer rows (E1, E2) and two inner rows (I1, I2) arranged therebetween, **in that** the insertion chambers (34) are arranged in the same block of insertion chambers (33), and **in that**, for each of said rows, said block has a series of insertion slots (38) making it possible to insert a decorative banderole (26A) in each chamber of the row, two series of slots communicating with respective ones of the chambers of an outer row (E1; E2) and with respective ones of the chambers of the juxtaposed inner row (I1; I2), being arranged on respective ones of two opposite sides (33A, 33B) of the block of insertion chambers.

11. An installation according to claim 10, **characterized in that** the drive wheels (46) disposed in the insertion chambers (34) of the first outer row (E1) are secured to a first outer support plate (PE1), the drive wheels located in the insertion chambers of the two inner rows (I1, I2) are secured to an inner support plate (PI), and the drive wheels disposed in the insertion chambers of the second outer row (E2) are secured to a second outer support plate (P1, P2), and **in that** the inner support plate (PI) and the two outer support plates (PE1, PE2) are movable in phase opposition (S1, S2).
